# EUROPÄISCHE PATENTANMELDUNG

(11) **EP 2 413 482 A1**
(43) Veröffentlichungstag der Anmeldung: **01.02.2012**
(21) Anmeldenummer: 10171438.4
(22) Anmeldetag: 30.07.2010
(51) Int. Cl.: H02K 7/14, H02K 16/04, H02K 1/14

(54) **Fluggerät**

(71) Anmelder: Siemens Aktiengesellschaft, 80333 München (DE)
(72) Erfinder: Hamann, Jens, 90765, Fürth (DE); Wolter, Wolfgang, 85241, Herbertshausen (DE)

(57) **Zusammenfassung**

Ein Fluggerät weist eine Propeller (3) und einen elektrischen Motor (5) als Antrieb des Propellers (3) auf, wobei der elektrische Motors (5) zumindest zwei Luftspalte (7, 9) aufweist.

## Beschreibung

Die Erfindung betrifft ein Fluggerät welches einen Propeller aufweist.

Ein Fluggerät, welches zumindest einen Propeller aufweist, ist z.B. ein Tragflächenflugzeug oder ein Drehflügler. Die Speicherung elektrischer Energie wird zunehmend effektiver, so dass der Einsatz eines elektrischen Motors als Antrieb für ein Fluggerät zunehmend an Bedeutung gewinnt. Bei Modellflugzeugen werden oftmals schon elektrische Antriebssysteme eingesetzt. Ein Flugzeug-Elektromotor kann als hochpoliger Motor ohne Getriebe (Magnetpolzahl=42) mit 20 kW bei einer Grenzdrehzahl von 2500 rpm in Modellflugzeugen, welche kleine Fluggeräte darstellen, Einsatz finden. In einer Startphase kann ein derartiger elektrischer Motor vielleicht ein Leistungsgewicht von ca. 3.6 kW/kg erzielen.

Eine Aufgabe der vorliegenden Erfindung ist es, die Leistungsfähigkeit elektrisch angetriebener Fluggeräte zu verbessern. Dies betrifft nicht nur Modellflugzeuge sondern beispielsweise auch Hubschrauber, Transportflugzeuge, Passagierflugzeuge, Drohnen, usw. Dies sind Fluggeräte, welche auch mit einem elektrischen Motor als Antriebsmaschine ausgestattet werden können.

Eine Lösung der Aufgabe ergibt sich insbesondere gemäß der Ansprüche 1 bis 7.

Ein permanenterregter Motor und ein Hubschrauber-Hauptpropeller können in einer Ausgestaltung eines Fluggerätes gemeinsam gelagert sein. Die gemeinsame Lagerung kann z.B. eine Gewichtsreduzierung im Vergleich zu einer Einzellagerung der jeweiligen Baueinheiten bewirken. Die Größe des Motors wird durch das Drehmoment bestimmt. Um eine hohe Drehmomentausbeute zu haben wird ein hochpoliger Motor konzipiert, bei dem die Pole auf einem großen Durchmesser liegen. Um die Ausnutzung zu steigern ist der Motor in einer Duplexanordnung angeordnet. Ein außenliegender Stator und ein innenliegender Stator können beispielsweise mittels Öl gekühlt sein.

Der Läufer des elektrischen Motors kann beispielsweise eine Haubenform aufweisen. Auf dem Läufer befinden sich hochtemperaturfeste Permanentmagnete. Die Permantmagnete können beispielsweise geschichtet sein. Hiermit kann das Ziel verfolgt werden, möglichst wenige Wirbelstromverluste zu erzeugen.

Der Luftspalt des elektrischen Motors und/oder die Permanentmagnete können mit Luft gekühlt werden. Weist der Stator, also insbesondere die beiden Statorsysteme, eine Ölkühlung auf, so ist dieser gegenüber dem permanenterregten Läufersystem abzudichten.

In einer Ausgestaltung des Fluggerätes weist dieses ein Magnetlager auf. Damit kann der Wirkungsgrad des Elektroantriebs gesteigert werden. Das bzw. die Magnetlager sind in einer Ausführung als geregelte Magnetlager konzipiert.

Ein elektrischer Hubschrauber Hauptpropeller ist beispielsweise derart ausgestaltbar, dass das Antriebssystem eine Leistung von ca. 723 kW @ 365 rpm aufweist. Der Nennpunkt liegt bei 75% der Leistung (542 kW) @ 365 rpm und ist hinsichtlich Wirkungsgrad und Leistungsgewicht zu optimieren. Das Nennmoment entspricht 14,1 kNm.

In einer Ausgestaltung eines Fluggerätes ist dieses derart gestaltet, dass sich ein spezifisches Leistungsgewicht von 8kW/kg ergibt. Hierzu können verschiedene Maßnahmen beitragen, welche beispielhaft nachfolgend aufgelistet sind, wobei die Maßnahmen einzeln oder in beliebiger Variation kombinierbar sind:
- außenliegender und innen angeordneter Stator (polyphasige permanterregte Synchronmaschine in Duplexanordnung);
- Öl-Kühlung eines oder zweier Statoren innen und außen mit Abdichtung zum Luftspalt;
- Rotor als Haube ausgeführt, welche hochfestes Carbon/Kevlar aufweist, wobei hochtemperaturfeste Permanentmagneten in den Rotor eingebettet sind;
- die Rotor Haube ist an der Hauptpropeller Welle befestigt und wird durch die Propellerlagerung gelagert;
- alternativ Haupt- und Stützlager als geregelte Magnetlagerung um den Wirkungsgrad zu verbessern und Störmomente auf das Lager auszuregeln und Geräusche zu minimieren;
- der Rotor läuft in Luft und ist luftgekühlt; die Wirbelstromverluste der Permanentmagnete und die Strahlungsverluste der Innenflächen des äußeren Stators und die Außenfläche des inneren Stators sind einer fremdbelüfteten Luftführung abzuführen;
- der Rotor weist eine Sprühölkühlung auf;
- weniger Bauteile durch gemeinsame Lagerung von Rotor und Propellerwelle;
- durch Wegfall des Getriebes ist eine Gewichtseinsparung erzielbar (z.B. ca. 200 kg);
- kompakte Bauweise und damit weniger Verluste und/oder weniger Platzbedarf;
- Ausbildung des Wicklungssystem des Stators mit MICALASTIC T (Wärmeklasse 200 Grad Celsius);
für die Statorbleche sind verlustarme Sandwichbleche eingesetzt; und
- eine Flachlitzenwicklung (wirkt gegen eine hohe Stromverdrängung).

Eine Auslegung eines permanenterregten Motors mit einer Spitzenleistung von 723 kW @ 365 rpm für einen Helikopter könnte sich grob wie folgt darstellen:
Luftspaltdurchmesser ca. 1,1 m;
Polteilung 50mm;
ca. 35 Polpaare;
Statorhöhe ca. 150 mm;
Statorbreite - Ringbreite ca 120 mm;
Luftspalt ca 6mm; und
elektrische Grundfrequenz ca. 365/60 x 35 =213 Hz

Das Gewicht für Innenstator + Außenstator + Permanentmagnete kann sich auf Grundlage der obigen Daten auf ca. 100kg belaufen. Damit ergibt sich ein Leistungsgewicht von 723kW/100kg = 7,23 kW/kg

In einer allgemeinen und prinzipielleren Betrachtungsweise der obig beschriebenen speziellen Ausgestaltungen kann ein Fluggerät folglich einen Propeller und einen elektrischen Motor als Antrieb des Propellers aufweisen, wobei der elektrische Motor zumindest zwei Luftspalte aufweist. Fluggeräte sind auch derart ausbildbar, dass diese eine Vielzahl von Propellern aufweisen. Bei einem Helikopter sind dies beispielsweise der Hauptrotor und der Heckrotor. Ein Propeller kann dabei einen oder eine Vielzahl von Drehflügeln aufweisen.

In einer Ausgestaltung des Fluggerätes weist der elektrische Motor bogenförmige Linearmotorsegmente auf.

Mit einer Segmentierung des elektrischen Motors können verschiedene Vorteile verbunden sein. Die Segmentierung kann den Zweck haben eine Redundanz zu ermöglichen. Dies gelingt beispielsweise beim Betrieb an mehreren Umrichtern, so dass bei Ausfall eines oder mehrerer Segmente der Motor noch mit reduzierter Leistung betrieben werden kann.

Ein Läufer des elektrischen Motors ist derart ausbildbar, dass dieser Permanentmagnete aufweist. Die Permanentmagnete sind beispielsweise scheibenförmig oder ringförmig angeordnet.

In einer weiteren Ausgestaltung des Fluggerätes ist der Läufer des elektrischen Motors, also der Rotor des elektrischen Motors, mechanisch mit einer Welle des Propellers verbunden, wobei ein Verbindungselement einen faserverstärkten Kunststoff aufweist.

In einer weiteren Ausgestaltung des Fluggerätes ist die Welle mittels eines ersten Lagers und eines zweiten Lagers gelagert, wobei auch der Läufer über das erste und zweite Lager gelagert ist.

In einer weiteren Ausgestaltung des Fluggerätes entspricht eine Symmetrieachse der Luftspalte der Rotationsachse des Propellers.

Nachfolgend wird die Erfindung beispielhaft anhand von Figuren beschrieben. Dabei zeigt:
- FIG 1: einen Teilschnitt eines Helikopters;
- FIG 2: einen Statorring und einen Rotor;
- FIG 3: einen Aufsicht auf einen Stator; und
- FIG 4: eine perspektivische Darstellung eines Stators.

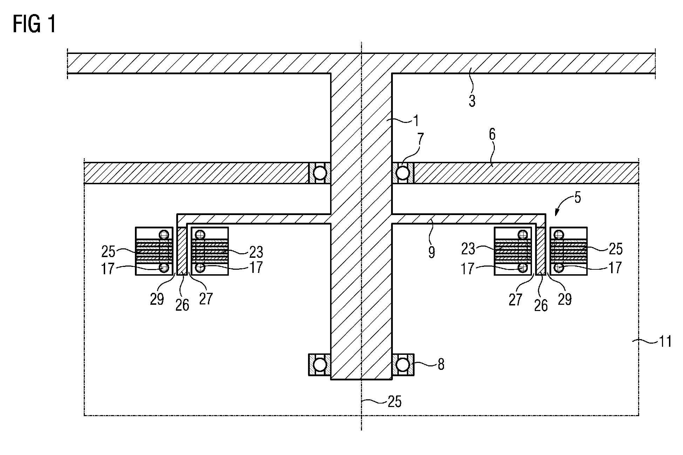

Die Darstellung gemäß FIG 1 zeigt einen Propeller 3, welcher über eine Welle 1 mit einem elektrischen Motor 5 als Antrieb des Propellers 3 gekoppelt ist. Der elektrische Motor 5 weist einen ersten Stator 23 und einen zweiten Stator 25 auf, wobei der erste Stator 23 und der zweite Stator 25 kreisförmig bzw. ringförmig ausgebildet sind. Der erste Stator 23 kann als ein Innenstator bezeichnet werden, wobei der zweite Stator als Außenstator bezeichnet werden kann. Zwischen den Statoren 23 und 25 befinden sich Luftspalte 27 und 29. Die Statoren 23 und 25 weisen Wicklungen und damit auch Wickelköpfe 17 auf.

Der Rotor 9 ist haubenförmig aufgebaut und weist in Endbereichen Permanentmagnete 26 auf. Der Rotor 9 weist eine mechanische Verbindung mit der Welle 1 auf, wobei diese zu einem Hubschraubergehäuse (Dach) 6 hin mittels eines Hauptlagers 7 für Propeller und Motor gelagert ist. Ferner ist die Welle 1 über ein Stützlager 8 gelagert. Die Welle 1 weist eine Rotationsachse 25 auf, wobei diese mit der Symmetrieachse und/oder Rotationsachse des Rotors 9 zusammenfällt.

Am Dach 6 des Hubschraubers ist ein Gehäuse 11 des elektrischen Motors 5 angebracht.

Der innere Statorring 23 und/oder der äußere Statorring 25 können mittels Öl gekühlt sein. Die Permanentmagnete 26 des Rotors 9 können geschichtet sein und in einer Carbonhaube und/oder Kevlarhaube eingebettet werden. Dabei hat ein mit Öl gekühlter Doppelstator-Motor mit gemeinsamer Propellerlagerung neben einer guten Kühleigenschaft auch ein gutes Verhältnis von Leistung zu Gewicht, da Motor und Propeller gemeinsam gelagert sind.

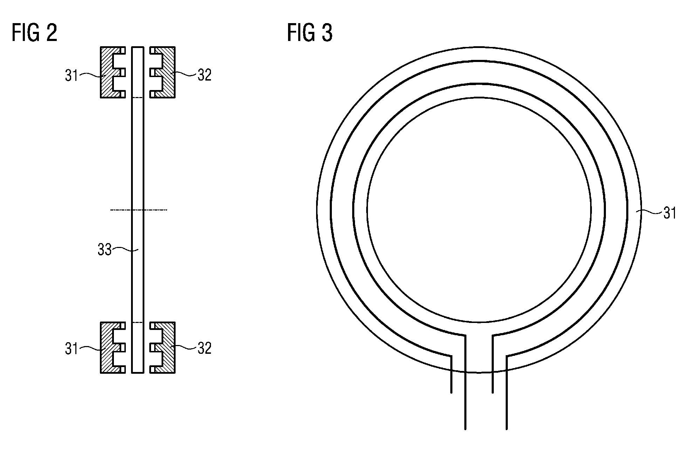

Die Darstellung gemäß FIG 2 zeigt schematisch ein Layout für einen einfachen Statorring 31 und 32, wobei eine kohlefaserverstärkte Rotorscheibe 33 vorgesehen ist. Im Gegensatz zu FIG 1 ist in FIG 2 der Rotor nicht mehr haubenförmig, sondern scheibenförmig.

Die Darstellung gemäß FIG 3 zeigt einen Statorring 31 nach FIG 2 aus einer anderen Perspektive. Ein derart aufgebauter elektrischer Motor bedient sich des Transversalflussprinzips. Die bedeutet, dass in einer Ausgestaltung des Fluggerätes dieses als Antrieb für einen Propeller einen Transversalflussmotor aufweist. Dieser kann zwei- oder dreiphasig aufgebaut sein.

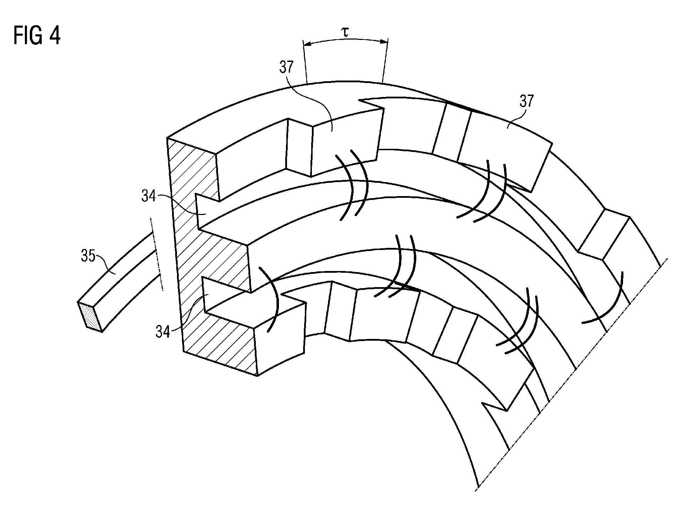

Die Darstellung gemäß FIG 4 zeigt ausschnittsweise eine perspektivische Darstellung eines Stators einer Transversalflussmaschine, mit Zähnen 37 und Wicklungsnuten 34 für Wicklungen 35 des Stators. Die Wicklungen können in diesem Motor aber auch in anderen Motortypen beispielsweise einen Metallverbundwerkstoff aufweisen. Ringwicklungen können ferner derart ausgebildet sein, dass diese innen hohl sind und derart beispielsweise innen durch Wasser gekühlt werden können. Als Material für derartige Wicklungen können Kupfer/AluminiumLegierungen verwendet werden.

## Patentansprüche

1. Fluggerät, welches einen Propeller (3) und einen elektrischen Motor (5) als Antrieb des Propellers (3) aufweist, wobei der elektrische Motors (5) zumindest zwei Luftspalte (7, 9) aufweist.

2. Fluggerät nach Anspruch 1, wobei der elektrische Motor (5) bogenförmige Linearmotorsegmente aufweist.

3. Fluggerät nach Anspruch 1 oder 2, wobei der Läufer (11) des elektrischen Motors (5) Permanentmagnete (13) aufweist.

4. Fluggerät nach einem der Ansprüche 1 bis 3, wobei der Läufer (11) mechanisch mit einer Welle (15) des Propellers (3) verbunden ist, wobei ein Verbindungselement (17) einen faserverstärkten Kunststoff aufweist.

5. Fluggerät nach einem der Ansprüche 1 bis 4, wobei ein erstes Lager (21) und ein zweites Lager (23) die Welle (15) lagert, wobei der Läufer (11) über das erste und zweite Lager (21,23) gelagert ist.

6. Fluggerät nach einem der Ansprüche 1 bis 5, wobei eine Symmetrieachse der Luftspalte (7,9) der Rotationsachse (25) des Propellers (3) entspricht.

7. Fluggerät nach einem der Ansprüche 1 bis 6, wobei zur Lagerung des Propellers (3) und/oder des elektrischen Motors (5) ein Magnetlager vorgesehen ist.
